# EUROPÄISCHE PATENTSCHRIFT

(11) **EP 3 515 266 B1**
(45) Veröffentlichungstag und Bekanntmachung des Hinweises auf die Patenterteilung: **26.01.2022**
(21) Anmeldenummer: 17761261.1
(22) Anmeldetag: 04.09.2017
(51) Int. Cl.: A47J 36/32, G06F 3/16, A47J 43/046, A47J 27/00

(54) **REZEPTBASIERTE KÜCHENHILFE**
RECIPE-BASED COOKING AID
AIDE CULINAIRE À BASE DE RECETTE

(30) Priorität: 20.09.2016 DE 102016218016
(43) Veröffentlichungstag der Anmeldung: 31.07.2019
(73) Patentinhaber: BSH Hausgeräte GmbH, 81739 München (DE)
(72) Erfinder: RÖCKL, Matthias, 85521 Ottobrunn (DE)
(86) Internationale Anmeldenummer: PCT/EP2017/072074
(87) Internationale Veröffentlichungsnummer: WO 2018/054668

(56) Entgegenhaltungen:
- DE-A1-102010 037 769
- DE-A1-102010 060 650
- DE-A1-102013 106 691
- DE-A1-102014 112 115
- FR-A1- 2 798 757

## Beschreibung

Die Erfindung betrifft eine rezeptbasierte Küchenhilfe. Insbesondere betrifft die Erfindung eine Technik zur Unterstützung einer Bedienperson bei der Zubereitung einer Speise.

### Stand der Technik

Ein Küchenrezept, insbesondere ein Koch- oder Backrezept, umfasst eine Abfolge von Verarbeitungsschritten, um eine vorbestimmte Speise zuzubereiten. Traditionell sind Rezepte in Kochbüchern zusammengefasst, deren Handhabung während des Umgangs mit Speisen und Zutaten schwierig ist. Ein Rezept kann beispielsweise aus hygienischen Gründen auch auf einem abwaschbaren elektronischen Anzeigegerät angezeigt werden.

EP 2 556 778 B1 betrifft eine Küchenmaschine mit einem Touch-Display, auf dem Verarbeitungsschritte eines Rezepts dargestellt werden können. Die FR 2 798 757 A1 beschäftigt sich mit einer Vorrichtung zur Unterstützung bei einer kulinarischen Zubereitung mit einer Mehrzahl von Elektrohaushaltsgeräten.

Bekannte Techniken zeigen üblicherweise einen oder mehrere Verarbeitungsschritte gleichzeitig an und bieten nur geringe Flexibilität, um auf einen Benutzer einzugehen. Bekannte integrierte Lösungen sind üblicherweise auf eine einzige vorbestimmte Vorrichtung beschränkt, die dazu eingerichtet ist, einen Verarbeitungsschritt durchzuführen oder zu unterstützen, beispielsweise durch Kneten, Rühren oder Raspeln.

Eine der vorliegenden Erfindung zugrunde liegende Aufgabe besteht darin, eine verbesserte Technik anzugeben, die einen Benutzer bei der Zubereitung einer Speise auf der Basis eines Küchenrezepts flexibel unterstützt. Die Erfindung löst diese Aufgabe mittels der Gegenstände der unabhängigen Ansprüche. Unteransprüche geben bevorzugte Ausführungsformen wieder.

### Offenbarung der Erfindung

Ein Küchenrezept umfasst eine Vielzahl von Verarbeitungsschritten und jeweils zugeordnete Übergangsbedingungen. Ein Verfahren zum Verarbeiten des Küchenrezepts umfasst Schritte des Bestimmens eines aktuellen Verarbeitungsschritts des Küchenrezepts und einer zugeordneten Übergangsbedingung; des Ausgebens einer Information in Abhängigkeit des aktuellen Verarbeitungsschritts; des Abtastens eines Parameters, dessen Wert das Erfüllen der Übergangsbedingung steuert; und des Setzens eines folgenden Verarbeitungsschritts des Küchenrezepts als aktuellen Verarbeitungsschritt, falls die Übergangsbedingung erfüllt ist.

Im Unterschied zu üblichen rezeptbasierten Techniken kann ein ereignisgesteuerter Übergang zwischen einem Verarbeitungsschritt zum nächsten erfolgen. Insbesondere kann der Übergang automatisch ausgelöst werden, wenn der Parameter die Übergangsbedingung erfüllt. Dadurch können auch komplexe Abläufe modelliert werden, die beispielsweise Verzweigungen, Schleifen oder Nebenläufigkeiten umfassen. In einer Ausführungsform wird zu einem Zeitpunkt nur ein einziger Verarbeitungsschritt behandelt, in einer weiteren Ausführungsform können auch mehrere Verarbeitungsschritte nebenläufig erfolgen. Jeder Ausführungsschritt kann unabhängig von den anderen behandelt werden oder die Ausführungsschritte können kausal oder logisch zusammenhängen.

In einer ersten Variante umfasst die Information eine Steueranweisung für ein steuerbares Küchengerät, wobei das Verfahren einen Schritt des Steuerns des Küchengeräts umfasst. Bevorzugt ist das Küchengerät nicht auf ein spezifisches Modell beschränkt, sondern es ist eine allgemeine Schnittstelle vorgesehen, über die beliebige, auch mehrere, Küchengeräte angesteuert werden können. So kann beispielsweise vorausschauend ein Backofen vorgeheizt oder eine Dunstabzugshaube eingeschaltet werden. Ist ein Küchengerät nicht vorhanden, so kann ein alternativer Verarbeitungsschritt oder eine alternative Übergangsbedingung verwendet werden. Das Küchenrezept kann so dynamisch und ggf. interaktiv an einen Gerätepark eines Benutzers angepasst werden.

Insbesondere in dieser Variante kann der Parameter einen Betriebszustand des Küchengeräts betreffen. Beispielsweise kann der Parameter die Temperatur eines Backofens betreffen und eine Übergangsbedingung kann erfüllt sein, wenn die Temperatur einen Wert von 220 °C erreicht hat. Die Kontrolle des Küchengeräts kann dadurch wenigstens teilweise automatisiert werden, sodass ein Benutzer bei der Zubereitung von Speisen deutlich entlastet werden kann.

In einer zweiten Variante, die mit der ersten Variante kombinierbar ist, ist die Information an einen Benutzer gerichtet, wobei das Ausgeben eine textuelle, bildliche, akustische oder haptische Information betrifft. Unterschiedliche Informationskanäle (visuell, akustisch, haptisch) können auch miteinander kombiniert werden und der Benutzer kann einen bevorzugten Informationskanal auswählen.

In einer weiteren Ausführungsform umfasst der Parameter das Verstreichen einer vorbestimmten Zeitdauer. So können beispielsweise eine Garzeit oder eine Ruhezeit einer Speise oder eines Zwischenprodukts automatisch überwacht werden. Der Beginn der Zeitdauer kann an ein vorbestimmtes Ereignis geknüpft sein, beispielsweise das Absolvieren eines vorbestimmten Verarbeitungsschritts. Das Beenden der Zeitdauer kann mittels eines Zeitgebers überwacht werden.

Insbesondere ein zeitgesteuerter Vorgang eignet sich besonders für die nebenläufige Ausführung. Anders ausgedrückt kann während des Ablaufs der vorbestimmten Zeitdauer ein anderer Verarbeitungsschritt durchgeführt werden. Ist die Zeitdauer abgelaufen, so kann der aktuelle Verarbeitungsschritt unterbrochen werden, um einen Verarbeitungsschritt durchzuführen, der auf den Ablauf der Zeitdauer folgt und keinen Aufschub duldet. Beispielsweise kann ein Verarbeitungsschritt des Schälens oder Schneidens durch den Verarbeitungsschritt des Entfernens einer Schüssel aus einem Backofen unterbrochen werden.

In einer weiteren Ausführungsform umfasst die Übergangsbedingung ein Hinzufügen einer bestimmten Menge einer Zutat in ein Gefäß, wobei das Abtasten des Parameters ein Bestimmen des Gewichts des Gefäßes umfasst. Es ist weiterhin bevorzugt, dass ein gradueller Fortschritt beim Erreichen der Übergangsbedingung einem Benutzer dargeboten wird, beispielsweise auf optische, akustische oder haptische Weise. Soll beispielsweise zu einer Schüssel mit Mehl eine vorbestimmte Menge Zucker hinzugefügt werden, so kann während des Hinzufügens beispielsweise ein akustischer Hinweis ausgegeben werden, der auf die Menge des bereits zugefügten Zuckers hinweist. Dazu kann beispielsweise ein Piepton in Höhe und/oder Frequenz in Abhängigkeit einer hinzugefügten Menge moduliert werden. Wird die hinzuzufügende Menge um mehr als ein vorbestimmtes Maß überschritten, so kann ein entsprechendes Fehlersignal ausgegeben werden.

Erfindungsgemäß umfasst die Übergangsbedingung eine Konsistenzänderung einer Zutat in einem Gefäß unter dem Einfluss einer mechanischen Bearbeitung. Dabei umfasst der Parameter Vibrationen des Gefäßes und auf der Basis einer Frequenzverteilung der Vibrationen wird bestimmt, ob die Übergangsbedingung erfüllt ist. Umfasst der Verarbeitungsschritt beispielsweise das Schlagen von Sahne oder das Kneten eines Teigs, so kann ein Fortschritt einer mechanischen Bearbeitung der Zutat anhand der Verteilung von Vibrationsfrequenzen des Gefäßes bestimmt werden. Je kompakter oder zäher die Zutat ist, desto stärker können niederfrequente Signale dominant sein. So kann auf einfache und effiziente Weise die Konsistenz der Zutat bestimmt werden, um rechtzeitig zu einem nachfolgenden Verarbeitungsschritt übergehen zu können.

Es ist weiterhin bevorzugt, dass eine Benutzereingabe abgetastet und in Abhängigkeit der Benutzereingabe ein Verarbeitungsschritt des Küchenrezepts als aktueller Verarbeitungsschritt gesetzt wird. Das Abtasten und Verarbeiten der Benutzereingabe ist bevorzugt zu jedem Zeitpunkt möglich. So kann beispielsweise ein Verarbeitungsschritt wiederholt, übersprungen oder verändert werden. Einem Benutzer kann auch eine Auswahl unterschiedlicher zur Verfügung stehender Verarbeitungsschritte angeboten werden, aus denen er einen auswählen kann. So können unterschiedliche Varianten des Küchenrezepts verbessert dynamisch unterstützt werden.

Vorteilhaft umfasst das Abtasten der Benutzereingabe bevorzugt das Abtasten eines akustischen Signals. Insbesondere ist bevorzugt, dass der Benutzer seine Eingabe sprachlich, also durch ein gesprochenes Wort, Kommando oder Tonfolge, ausdrückt. Dadurch ist eine Steuerung auch aus einiger Entfernung möglich, der Benutzer muss seine Hände nicht zu Hilfe nehmen und es können einfache oder komplexe Anweisungen unterstützt werden. Eine einfache Anweisung umfasst beispielsweise das erneute akustische Ausgeben einer an den Benutzer gerichteten Information. Eine komplexere Anweisung kann beispielsweise ein nachträgliches Vergrößern einer Menge der zuzubereitenden Speise oder eine Abwandlung des Küchenrezepts betreffen.

Eine Vorrichtung zur Verarbeitung des oben beschriebenen Küchenrezepts umfasst eine Speichereinrichtung zur Ablage des Küchenrezepts; eine Verarbeitungseinrichtung, die dazu eingerichtet ist, einen aktuellen Verarbeitungsschritt des Küchenrezepts und eine zugeordnete Übergangsbedingung zu bestimmen; und eine Information in Abhängigkeit des aktuellen Verarbeitungsschritts auszugeben. Ferner umfasst die Vorrichtung eine Abtasteinrichtung für einen Parameter, dessen Wert das Erfüllen der Übergangsbedingung steuert, wobei der Parameter Vibrationen des Gefäßes betrifft. Dabei ist die Verarbeitungseinrichtung ferner dazu eingerichtet, einen folgenden Verarbeitungsschritt des Küchenrezepts als aktuellen Verarbeitungsschritt zu setzten, falls die Übergangsbedingung erfüllt ist. Erfindungsgemäß ist die Verarbeitungseinrichtung dafür eingerichtet, als eine Übergangsbedingung eine Konsistenzänderung einer Zutat in einem Gefäß unter dem Einfluss einer mechanischen Bearbeitung zu berücksichtigen und auf der Basis einer Frequenzverteilung der Vibrationen zu bestimmen, ob die Übergangsbedingung erfüllt ist.

Die Verarbeitungseinrichtung kann insbesondere einen programmierbaren Mikrocomputer oder Mikrocontroller umfassen, der dazu eingerichtet ist, wenigstens einen Teil des oben beschriebenen Verfahrens auszuführen. Das Verfahren kann dabei insbesondere als Computerprogrammprodukt mit Programmcodemitteln ausgedrückt sein.

Die Erfindung wurde mit Bezug auf ein Verfahren und eine Vorrichtung erläutert. Sofern nichts anderes angegeben ist, sind die Merkmale des Verfahrens analog auf die Vorrichtung anwendbar.

Die Erfindung wird nun unter Bezug auf die beiliegenden Figuren genauer beschrieben, in denen:
- Fig. 1: ein System mit einer Vorrichtung zur Verarbeitung eines Küchenrezepts;
- Fig. 2: ein Ablaufdiagramm eines Verfahrens zur Verarbeitung eines Küchenrezepts; und
- Fig. 3: eine Darstellung eines Küchenrezepts mit einer Vielzahl von Verarbeitungsschritten
darstellt.

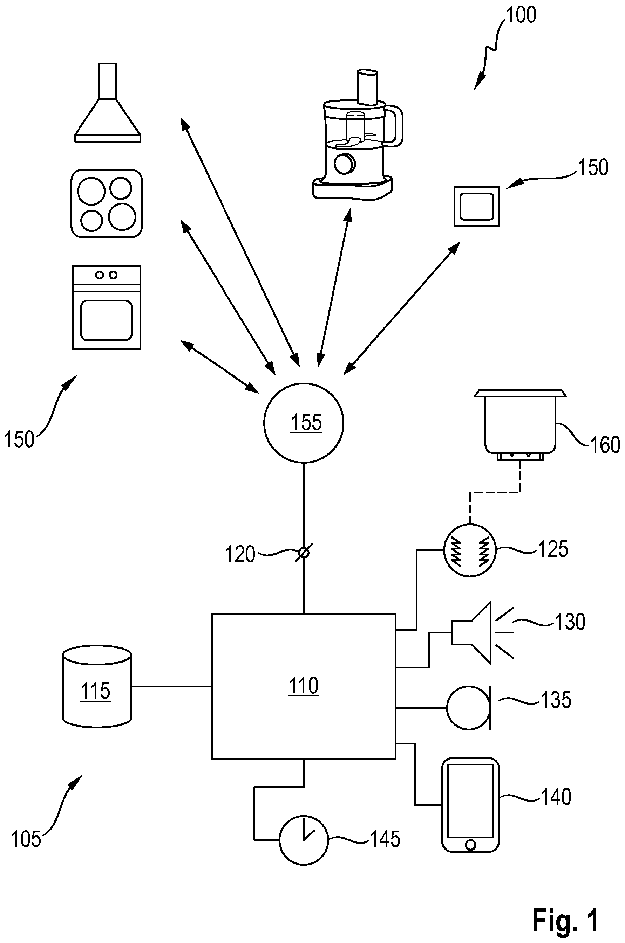

Figur 1 zeigt ein System 100 mit einer Vorrichtung 105 zur Verarbeitung eines Küchenrezepts. Die Vorrichtung 105 umfasst eine Verarbeitungseinrichtung 110 und eine Speichervorrichtung 115. In weiter bevorzugten Ausführungsformen können eine Schnittstelle 120, ein Vibrationssensor oder Vibrationsgenerator 125, eine akustische Ausgabeeinrichtung 130, eine akustische Eingabeeinrichtung 135, eine optische Ausgabeeinrichtung 140, die mit einer haptischen Eingabeeinrichtung integriert ausgeführt sein kann, oder ein Zeitgeber 145 zusätzlich vorgesehen sein. In der dargestellten Ausführungsform ist die optische Ausgabeeinrichtung 140 exemplarisch als Teil eines Smartphones dargestellt. In einer weiteren Ausführungsform sind auch die restlichen Komponenten der Vorrichtung 105 vom Smartphone umfasst bzw. mit diesem integriert ausgeführt.

Die Schnittstelle 120 kann insbesondere eine drahtlose Schnittstelle umfassen, über die eine Verbindung zu einem Küchengerät 150 möglich ist. In der beispielhaften Darstellung von Figur 1 sind an Küchengeräten 150 exemplarisch ein Backofen, ein Herd, eine Abzugshaube, ein Schneid- oder Knetwerk und ein Mikrowellenofen dargestellt. Es können auch andere oder zusätzliche Küchengeräte 150 vorgesehen sein. Die Küchengeräte 150 sind jeweils dazu eingerichtet, eine Anforderung einer externen Komponente entgegenzunehmen und daraufhin ihren Betriebszustand zu steuern. Außerdem kann ein aktueller Betriebszustand eines Küchengeräts 150 abgefragt bzw. ausgelesen werden. Die Küchengeräte 150 können direkt oder über eine zentrale Komponente 155 verwaltet werden, um beispielsweise Zugriffsrechte, logische gegenseitige Ausschlüsse von Betriebszuständen oder frühere Betriebszustände zu verwalten. Eine Ausführung für die zentrale Komponente 155 ist unter der Bezeichnung BSH Home Connect Server bekannt. In anderen Ausführungsformen kann die zentrale Komponente 155 jedoch auch entfallen. Die Schnittstelle 120 kann auch mittels eines drahtgebundenen Netzwerks zu einem der Küchengeräte 150 führen.

Der Vibrationssensor 125 kann mit einem Gefäß 160, insbesondere einer Schüssel, mechanisch gekoppelt sein, wobei das Gefäß 160 dazu verwendet werden kann, Zutaten einer Speise oder eines Gerichts, das auf der Basis eines Küchenrezepts zubereitet werden soll, aufzunehmen. Dazu ist es üblicherweise nicht notwendig, dass das Gefäß 160 wie bei einer integrierten Küchenmaschine integraler Bestandteil eines Verarbeitungssystems ist. Vielmehr kann das Gefäß 160 dazu eingerichtet sein, die Zutat zur beliebigen Verarbeitung bereitzuhalten.

Der Vibrationssensor 125 ist dazu eingerichtet, Vibrationen des Gefäßes 160, die insbesondere bei einer mechanischen Verarbeitung der Zutat entstehen, abzutasten. Die Verarbeitungseinrichtung 110 kann diese Vibrationen analysieren, um insbesondere eine Konsistenz der Zutat zu bestimmen. Dazu können die abgetasteten Vibrationen, etwa mittels einer diskreten Fouriertransformation, in ihre Frequenzbestandteile zerlegt und diese dann analysiert werden. In einer anderen Ausführungsform kann auf der Basis der abgetasteten Vibrationen beispielsweise festgestellt werden, ob ein Rühren, Schlagen oder Kneten in einer vorteilhaften Geschwindigkeit erfolgt oder nicht.

In einer weiteren Ausführungsform kann durch die Vorrichtung 105 eine Vibration erzeugt werden, die über die mechanische Kopplung mit dem Gefäß 160 übertragen wird, sodass eine Bedienperson, die das Gefäß 160 vor sich hat oder ggf. mit einer Hand festhält, das Signal leicht aufnehmen kann.

Die akustische Ausgabeeinrichtung 130 ist bevorzugt dazu eingerichtet, Signale, Töne und insbesondere synthetisch generierte oder gesprochene Sprache auszugeben. Ein Benutzer der Vorrichtung 105 kann dadurch leicht über einen Zustand oder eine durchzuführende Tätigkeit informiert werden. In ähnlicher Weise ist die akustische Eingabevorrichtung 135 bevorzugt dazu eingerichtet, Geräusche, Töne und insbesondere gesprochene Sprache aufzunehmen. Die Verarbeitungseinrichtung 110 kann dazu eingerichtet sein, die abgetastete Sprache zu analysieren und auf einer Benutzereingabe abzubilden, die sie dann entsprechend berücksichtigt. Die Interaktion der Vorrichtung 105, gesteuert durch die Verarbeitungseinrichtung 110, mit dem Benutzer kann von besonderem Interesse für das erfolgreiche Verwenden der Vorrichtung 105 sein.

Die optische Ausgabeeinrichtung 140 ist bevorzugt graphikfähig, selbstleuchtend und/oder mehrfarbig ausgeführt. Mittels der Ausgabeeinrichtung 140 können insbesondere textuelle oder bildliche Informationen bereitgestellt werden. Ist die Ausgabeeinrichtung 140 mit einer haptischen Eingabeeinrichtung gekoppelt, so spricht man auch von einem Touchscreen. Die haptische Eingabeeinrichtung 140 kann in diesem Fall als Sensor einer Waage verwendet werden. Dazu kann das Gefäß 160 auf die Eingabeeinrichtung 140 und diese auf einen Untergrund platziert werden. Ist die Eingabeeinrichtung 140 dazu eingerichtet, unterschiedlich starke Betätigungen analog oder in einer Vielzahl von Schritten aufzulösen, so kann die Verarbeitungseinrichtung 110 auf der Basis der Stärke des Drucks des Gefäßes 160 auf die Eingabevorrichtung 140 auf ein Gewicht des Gefäßes 160 bzw. ihres Inhalts schließen. In einer anderen Ausführungsform ist eine separate Waage vorgesehen, die, insbesondere mittels der Schnittstelle 120, mit der Vorrichtung 105 gekoppelt werden kann. Auch die anderen dargestellten Ein- oder Ausgabeeinrichtungen können in anderen Ausführungsformen separat realisiert und insbesondere mittels der Schnittstelle 120 an die Verarbeitungseinrichtung 110 angebunden sein.

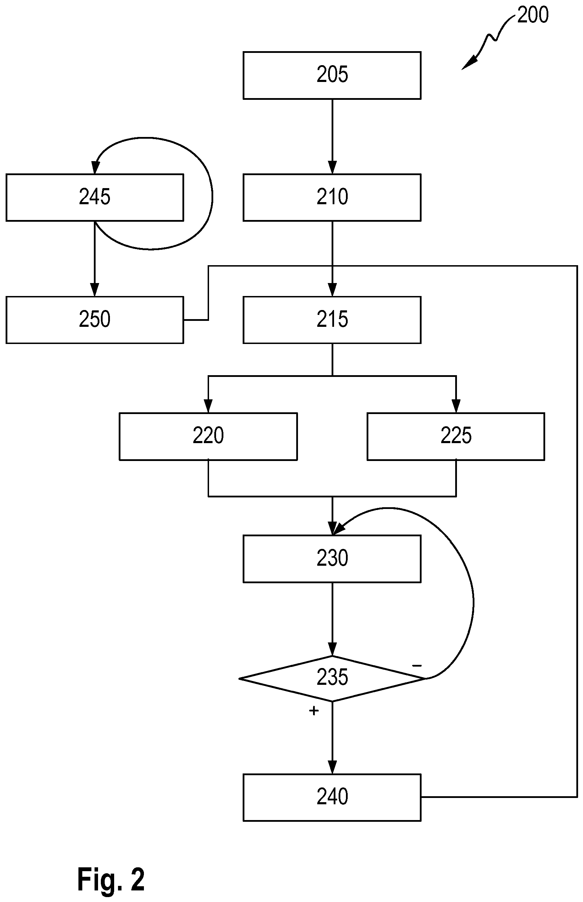

Figur 2 zeigt ein Ablaufdiagramm eines Verfahrens 200 zur Verarbeitung eines Küchenrezepts mittels des Systems 100 von Figur 1. Es ist zu beachten, dass die dargestellten Schritte in anderen Ausführungsformen auch in einer anderen Reihenfolge ausgeführt werden können. Weitere Abwandlungen sind ebenfalls möglich. Das Verfahren 200 kann wenigstens teilweise mittels der Vorrichtung 105 und weiter bevorzugt mittels der Verarbeitungseinrichtung 110 durchgeführt werden. Dazu kann das Verfahren 200 als Computerprogrammprodukt vorliegen. Die oben beschriebenen Varianten und Ausführungsformen der Vorrichtung 105 gelten sinngemäß auch für das Verfahren 200 und umgekehrt.

In einem ersten Schritt 205 wird ein Küchenrezept ausgewählt. Dieser Schritt ist entbehrlich, falls in der Speichervorrichtung 115 nicht mehr als ein Küchenrezept abgelegt ist. Optional kann das Küchenrezept im Schritt 205 auch konfiguriert werden, beispielsweise indem eingegeben wird, welche von mehreren möglichen Varianten realisiert werden soll, für wie viele Personen oder Portionen das Küchenrezept umgesetzt werden soll und so weiter. Übliche Schritte der Berechnung oder Bestimmung einer Zutatenliste, des Austauschens bestimmter Zutaten durch Ersatzstoffe etc. können ebenfalls im Schritt 205 durchgeführt werden.

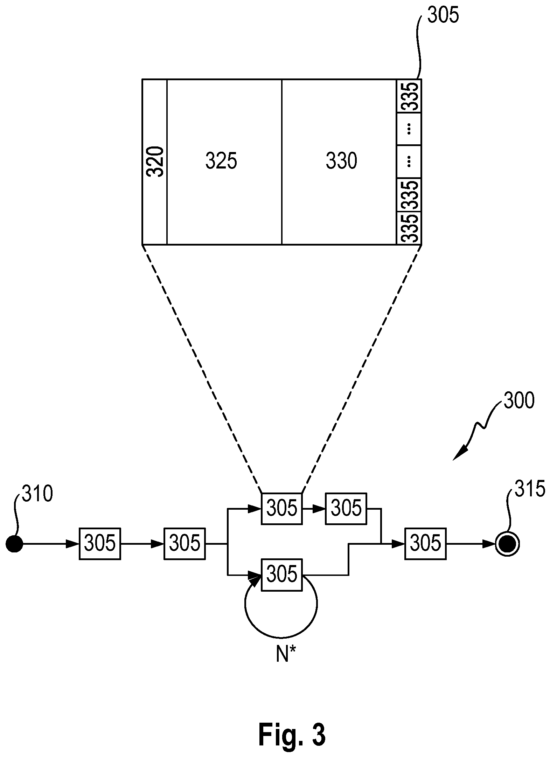

In einem Schritt 210 wird bevorzugt ein interner Zeiger auf einen ersten Verarbeitungsschritt des Küchenrezepts gesetzt. Wie unten mit Bezug auf Figur 3 noch genauer ausgeführt wird, umfasst das Küchenrezept eine Serie von Verarbeitungsschritten, wobei jedem Verarbeitungsschritt eine Übergangsbedingung zugeordnet ist, die erfüllt sein muss, um mit einem folgenden Verarbeitungsschritt fortzufahren. Zur Adressierung des aktuellen Verarbeitungsschritts wird vorliegend exemplarisch ein Zeiger verwendet, in anderen Ausführungsformen kann der jeweils aktuelle Verarbeitungsschritt auch auf andere Weise adressiert bzw. selektiert werden.

In einem Schritt 215 wird der aktuelle Verarbeitungsschritt beschafft. Dazu kann der Verarbeitungsschritt aus der Speichervorrichtung 115 geladen werden und ggf. werden noch zusätzliche Informationen, beispielsweise ein Bild oder ein Text, aus der Speichervorrichtung 115 beschafft.

Nachfolgend können in einem Schritt 220 Informationen ausgegeben werden, die an einen Benutzer der Vorrichtung 105 gerichtet sind. Diese Informationen können insbesondere bildlicher, textueller oder akustischer Natur sein. Dabei kann der Benutzer insbesondere davon in Kenntnis gesetzt werden, welche Tätigkeit im Rahmen des aktuellen Verarbeitungsschritts durchzuführen ist.

In einem Schritt 225 kann ein Steuerbefehl ausgegeben werden, insbesondere über die Schnittstelle 120, und weiter bevorzugt an ein Haushaltsgerät 150. Die Schritte 220 und 225 können alternativ ausgeführt werden, wenn der aktuelle Verarbeitungsschritt nur eine der genannten Optionen betrifft. Sie können auch gemeinsam ausgeführt werden, um insbesondere die Steuerung eines der Haushaltsgeräte 150 mit einer Information des Benutzers zu verbinden.

In einem Schritt 230 wird ein Parameter bestimmt. Dieser Parameter kann insbesondere mittels der haptischen Eingabeeinrichtung 140, der akustischen Eingabeeinrichtung 135, dem Vibrationssensor 125 oder dem Zeitgeber 145 bestimmt oder über die Schnittstelle 120 empfangen werden. Die dem aktuellen Verarbeitungsschritt zugeordnete Übergangsbedingung ist auf der Basis des abgetasteten Parameters formuliert, sodass der Wert des abgetasteten Parameters darüber entscheidet, ob die Übergangsbedingung erfüllt ist oder nicht. In weiteren Ausführungsformen können auch mehrere Parameter vorgesehen sein, die mit mehreren Schwellenwerten verglichen werden können, wobei die üblichen Booleschen Operatoren (UND, ODER, NICHT, ...) zur logischen Verknüpfung verwendet werden können, um die Übergangsbedingung zu formulieren bzw. zu bestimmen.

In einem Schritt 235 wird überprüft, ob die Übergangsbedingung erfüllt ist. Ist dies nicht der Fall, so kann das Verfahren 200 zum Schritt 230 zurückkehren und erneut durchlaufen. In einer anderen Variante kann das Verfahren 200 auch zu einem der Schritte 220, 225 zurückkehren. Dies ist insbesondere dann vorteilhaft, wenn beispielsweise der Schritt 220 ein Ausgeben einer Information umfasst, die auf den im Schritt 230 bestimmten Parameter hinweist. Dadurch kann einem Benutzer signalisiert werden, in welchem Grad die Übergangsbedingung bereits erfüllt ist.

Wird im Schritt 235 hingegen bestimmt, dass die Übergangsbedingung erfüllt ist, so kann in einem Schritt 240 der oben beschriebene Zeiger auf einen folgenden Verarbeitungsschritt gesetzt werden, bevor das Verfahren 200 zum Schritt 215 zurückkehrt. Dadurch wird effektiv der folgende Verarbeitungsschritt als aktueller Verarbeitungsschritt gesetzt und die geschilderten Vorgänge erneut durchlaufen.

Es ist bevorzugt, dass insbesondere in einem nebenläufigen Teil des Verfahrens 200 eine Benutzereingabe abgetastet und ausgewertet wird. In der dargestellten Ausführungsform wird hierzu in einem Schritt 245 eine Benutzereingabe insbesondere mittels der akustischen Eingabevorrichtung 135 oder der haptischen Eingabevorrichtung 140 abgetastet und analysiert. Insbesondere kann bestimmt werden, dass die Eingabe auf einen Wunsch des Benutzers hinweist, den aktuellen Verarbeitungsschritt zu verändern. Beispielsweise kann der Benutzer den aktuellen Verarbeitungsschritt erneut beginnen wollen. In diesem Fall kann in einem Schritt 250 der beschriebene Zeiger auf den gewünschten Verarbeitungsschritt gesetzt werden und das Verfahren 200 fährt im Schritt 215 fort. Der nebenläufige Teil der Schritte 245 und 250 kann unabhängig davon erneut durchlaufen werden.

Figur 3 zeigt eine schematische Darstellung eines Küchenrezepts 300 mit Verarbeitungsschritten 305. Das Küchenrezept 300 umfasst üblicherweise mehrere Verarbeitungsschritte 305, die eine vorbestimmte Sequenz zwischen einem Startzustand 310 und einem Endzustand 315 bilden. Eine exemplarische Ausführungsform eines der Verarbeitungsschritte 305 ist vergrößert dargestellt. Dabei sind die dargestellten Felder rein beispielhafter Natur.

Ein erstes Feld 320 kann eine fortlaufende Nummer oder Adresse des Verarbeitungsschritts 305 tragen. Ein Verarbeitungsschritt 305 kann anhand seiner Nummer 320 eindeutig identifiziert werden. Der oben mit Bezug auf Figur 2 beschriebene Zeiger kann die Nummer 320 enthalten, um einen Verarbeitungsschritt 305 zu adressieren.

Ein weiteres Feld 325 umfasst eine Information, die im Rahmen des Verarbeitungsschritts 305 auszugeben ist. Diese Information kann, insbesondere als Steuerinformation, an eines der Haushaltsgeräte 150 oder eines der Peripheriegeräte 125 bis 145 gerichtet sein oder an einen Benutzer. Eine Kombination dieser Varianten ist ebenfalls möglich. Insbesondere Information, die an den Benutzer gerichtet ist, kann zusätzliche Dateien umfassen, beispielsweise in Bild oder eine Videosequenz.

Ein weiteres Feld 330 umfasst bevorzugt eine Übergangsbedingung. Die Übergangsbedingung ist bevorzugt derart formuliert, dass sie einen auswertbaren Ausdruck unter Verwendung eines Parameters umfasst, wobei der Wert des Ausdrucks einen von zwei binären Werten annehmen kann, von denen der eine wahr und der andere falsch ausdrückt. Dabei kann auch eine Kombination unterschiedlicher binärer Zwischenergebnisse mittels Boolescher Algebra durchgeführt werden. Im Allgemeinen umfasst das Bestimmen, ob die Übergangsbedingung erfüllt ist, das Vergleichen eines Werts eines abgetasteten Parameters mit einem vorbestimmten Schwellenwert.

In einer bevorzugten Ausführungsform sind ferner eines oder mehrere weitere Felder 335 vorgesehen, die jeweils kennzeichnen, welcher Verarbeitungsschritt 305 der logisch folgende sein soll. Dabei können auch mehrere Verarbeitungsschritte 305 logisch folgen. Dazu kann das Küchenrezept 300 entweder verzweigen, etwa auf der Basis des Werts der Übergangsbedingung im Feld 330, oder es können mehrere nebenläufige Teilabläufe generiert werden.

Diese Konzepte sind in der exemplarisch dargestellten Ausführungsform des Küchenrezepts 300 erkennbar. In einer weiteren möglichen Ausführungsform kann auch einer der Verarbeitungsschritte 305 mehr als einmal, insbesondere N-mal durchgeführt werden. Die Übergangsbedingung 330 kann dabei eine lokale Zählvariable umfassen, deren Wert bei jedem Abarbeiten des Schritts 305 implementiert oder dekrementiert wird.

Weitere Flusssteuerungsmaßnahmen sind ebenfalls möglich. Beispielsweise kann der Benutzer dazu aufgefordert werden, an einer Verzweigung mehrerer auf einen Verarbeitungsschritt 305 folgender Verarbeitungsschritte 305 eine Auswahl zu treffen.

### Bezugszeichen

- 100: System
- 105: Vorrichtung
- 110: Verarbeitungseinrichtung
- 115: Speichervorrichtung
- 120: Schnittstelle
- 125: Vibrationssensor oder Vibrationsgenerator
- 130: akustische Ausgabeeinrichtung
- 135: akustische Eingabeeinrichtung
- 140: optische Ausgabeeinrichtung, ggf. mit haptischer Eingabeeinrichtung
- 145: Zeitgeber
- 150: Küchengerät
- 155: zentrale Komponente
- 160: Gefäß
- 200: Verfahren
- 205: Auswählen Küchenrezept
- 210: Zeiger auf ersten Verarbeitungsschritt
- 215: Holen Verarbeitungsschritt
- 220: Ausgeben Benutzerinformation
- 225: Ausgeben Steuerbefehl
- 230: Abtasten Parameter
- 235: Übergangsbedingung erfüllt?
- 240: Zeiger auf folgenden Verarbeitungsschritt
- 245: Abtasten Benutzereingabe
- 250: Setzen Verarbeitungsschritt

- 300: Küchenrezept
- 305: Verarbeitungsschritt
- 310: Startzustand
- 315: Endzustand
- 320: Nummer
- 325: Information
- 330: Übergangsbedingung
- 335: weitere Felder

## Patentansprüche

1. Verfahren (200) zum Verarbeiten eines Küchenrezepts (300) mittels eines Geräteparks eines Benutzers, der mehrere Küchengeräte umfasst, wobei das Küchenrezept (300) eine Vielzahl von Verarbeitungsschritten (305) und jeweils zugeordnete Übergangsbedingungen (330) umfasst, und wobei das Verfahren (200) folgende Schritte umfasst:
- Bestimmen (215) eines aktuellen Verarbeitungsschritts (305) des Küchenrezepts (300) und einer zugeordneten Übergangsbedingung (330);
- Ausgeben (220) einer Information (325) in Abhängigkeit des aktuellen Verarbeitungsschritts (305);
- Abtasten (230) eines Parameters eines ersten Küchengeräts des Geräteparks, dessen Wert das Erfüllen der Übergangsbedingung (330) steuert; und
- Automatisches Setzen (240) eines folgenden Verarbeitungsschritts (305) des Küchenrezepts (300) als aktuellen Verarbeitungsschritt (305), falls die Übergangsbedingung (330) erfüllt ist, wobei der folgende Verarbeitungsschritt ein zweites Küchengerät des Geräteparks betrifft, wobei das erste und zweite Küchengerät unterschiedlich sind,
**dadurch gekennzeichnet, dass**
- die Übergangsbedingung (330) eine Konsistenzänderung einer Zutat in einem Gefäß (160) unter dem Einfluss einer mechanischen Bearbeitung umfasst,
- der Parameter Vibrationen des Gefäßes (160) betrifft und
- auf der Basis einer Frequenzverteilung der Vibrationen bestimmt (235) wird, ob die Übergangsbedingung (330) erfüllt ist.

2. Verfahren (200) nach Anspruch 1, wobei die Information (325) eine Steueranweisung für ein steuerbares Küchengerät (150) umfasst und das Küchengerät (150) entsprechend gesteuert wird.

3. Verfahren (200) nach einem der vorhergehenden Ansprüche, wobei der Parameter einen Betriebszustand des Küchengeräts (150) betrifft.

4. Verfahren (200) nach einem der vorhergehenden Ansprüche, wobei die Information (325) an einen Benutzer gerichtete Daten umfasst, die textuell, bildlich, akustisch oder haptisch ausgegeben (220) werden.

5. Verfahren (200) nach einem der vorangehenden Ansprüche, wobei der Parameter das Verstreichen einer vorbestimmten Zeitdauer betrifft.

6. Verfahren (200) nach einem der vorangehenden Ansprüche, wobei die Übergangsbedingung (330) ein Hinzufügen einer bestimmten Menge einer Zutat in ein Gefäß (160) umfasst und das Abtasten (230) des Parameters ein Bestimmen des Gewichts des Gefäßes (160) umfasst.

7. Verfahren (200) nach einem der vorangehenden Ansprüche, wobei eine Benutzereingabe abgetastet (245) und in Abhängigkeit der Benutzereingabe ein Verarbeitungsschritt (305) des Küchenrezepts (300) als aktueller Verarbeitungsschritt (305) gesetzt (250) wird.

8. Verfahren (200) nach Anspruch 7, wobei das Abtasten (245) der Benutzereingabe das Abtasten eines akustischen Signals umfasst.

9. Vorrichtung (105) zur Verarbeitung eines Küchenrezepts (300) mittels eines Geräteparks eines Benutzers, der mehrere Küchengeräte umfasst, wobei das Küchenrezept (300) eine Vielzahl von Verarbeitungsschritten (305) und jeweils zugeordnete Übergangsbedingungen (330) umfasst, und wobei die Vorrichtung (105) folgendes umfasst:
- eine Speichereinrichtung (115) zur Ablage des Küchenrezepts (300);
- eine Schnittstelle (120), über die zumindest ein erstes und zweites Küchengerät des Geräteparks ansteuerbar sind, wobei das erste und zweite Küchengerät unterschiedlich sind,
- eine Verarbeitungseinrichtung (110), die dazu eingerichtet ist, einen aktuellen Verarbeitungsschritt (305) des Küchenrezepts (300) und eine zugeordnete Übergangsbedingung (330) zu bestimmen;
- und eine Information (325) in Abhängigkeit des aktuellen Verarbeitungsschritts (305) auszugeben; und
- eine Abtasteinrichtung (125, 135, 140, 145) für einen Parameter des ersten Küchengeräts, dessen Wert das Erfüllen der Übergangsbedingung (330) steuert;
- wobei die Verarbeitungseinrichtung (110) ferner dazu eingerichtet ist, einen folgenden Verarbeitungsschritt (305) des Küchenrezepts (300) automatisch als aktuellen Verarbeitungsschritt (305) zu setzen, falls die Übergangsbedingung (330) erfüllt ist, wobei der folgende Verarbeitungsschritt das zweite Küchengerät des Geräteparks betrifft;
**dadurch gekennzeichnet, dass**
- die Verarbeitungseinrichtung (110) dafür eingerichtet ist, als eine Übergangsbedingung (330) eine Konsistenzänderung einer Zutat in einem Gefäß (160) unter dem Einfluss einer mechanischen Bearbeitung zu berücksichtigen,
- der Parameter Vibrationen des Gefäßes (160) betrifft und
- die Verarbeitungseinrichtung (110) dafür eingerichtet ist, auf der Basis einer Frequenzverteilung der Vibrationen zu bestimmen (235), ob die Übergangsbedingung (330) erfüllt ist.

## Claims

1. Method (200) for processing a recipe (300) by means of a set of appliances of a user, which comprises a plurality of kitchen appliances, wherein the recipe (300) comprises a large number of process steps (305) as well as transition conditions (330) that are associated with each of these, and wherein the method (200) comprises the following steps:
- determining (215) a current process step (305) of the recipe (300) and a transition condition (330) that is associated therewith;
- outputting (220) an item of information (325) depending on the current process step (305);
- scanning (230) a parameter of a first kitchen appliance of the set of appliances, the value of which controls the satisfaction of said transition condition (330); and
- automatically setting (240) a subsequent process step (305) of the recipe (300) to be the current process step (305) if said transition condition (330) has been satisfied, wherein the following processing step relates to a second kitchen appliance of the set of appliances, wherein the first and second kitchen appliance are different, **characterised in that**
- the transition condition (330) comprises an alteration to the consistency of an ingredient in a container (160) by the influence of mechanical processing,
- the parameter relates to vibrations of the container (160) and
- based on a frequency distribution of the vibrations it is determined (235) whether the transition condition (330) has been satisfied.

2. Method (200) according to claim 1, wherein the information (325) comprises a control instruction for a controllable kitchen appliance (150) and the kitchen appliance (150) is correspondingly controlled.

3. Method (200) according to one of the preceding claims, wherein the parameter relates to an operating state of the kitchen appliance (150).

4. Method (200) according to one of the preceding claims, wherein the information (325) comprises data directed to a user, which is output (220) in a textual, graphical, acoustic or haptic manner.

5. Method (200) according to one of the preceding claims, wherein the parameter relates to the lapse of a predetermined time period.

6. Method (200) according to one of the preceding claims, wherein the transition condition (330) comprises the addition of a specific quantity of an ingredient into a container (160) and the scanning (230) of the parameter comprises determining the weight of the container (160).

7. Method (200) according to one of the preceding claims, wherein a user input is scanned (245) and depending on the user input a process step (305) of the recipe (300) is set (250) as the current process step (305).

8. Method (200) according to claim 7, wherein the scanning (245) of the user input comprises the scanning of an acoustic signal.

9. Device (105) for processing a recipe (300) by means of a set of appliances of a user, which comprises a plurality of kitchen appliances, wherein the recipe (300) comprises a large number of process steps (305) as well as transition conditions (330) that are associated with each of these, and wherein the device (105) comprises the following:
- a storage apparatus (115) for storing the recipe (300);
- an interface (120), via which at least a first and a second kitchen appliance of the set of appliances can be controlled, wherein the first and second kitchen appliance are different,
- a processing apparatus (110) which is designed to determine a current process step (305) of the recipe (300) as well as a transition condition (330) that is associated therewith;
- and to output information (325) depending on the current process step (305); and
- a scanning apparatus (125, 135, 140, 145) for a parameter of the first kitchen appliance, the value of which controls the satisfaction of said transition condition (330);
- wherein the processing apparatus (110) is also designed to automatically set a subsequent process step (305) of the recipe (300) to be the current process step (305) if said transition condition (330) has been satisfied, wherein the following processing step relates to the second kitchen appliance of the set of appliances, **characterised in that**
- the processing apparatus (110) is designed to take into consideration, as a transition condition (330), an alteration to the consistency of an ingredient in a container (160) by the influence of mechanical processing,
- the parameter relates to vibrations of the container (160) and
- the processing apparatus (110) is designed, based on a frequency distribution of the vibrations, to determine (235) whether the transition condition (330) has been satisfied.

## Revendications

1. Procédé (200) pour le traitement d'une recette de cuisine (300) au moyen d'un parc d'appareils d'un utilisateur, qui comprend plusieurs appareils de cuisine, dans lequel la recette de cuisine (300) comprend une pluralité d'étapes de traitement (305) et des conditions de transition (330) affectées respectives, et dans lequel le procédé (200) comprend les étapes suivantes :
- détermination (215) d'une étape de traitement actuelle (305) de la recette de cuisine (300) et d'une condition de transition affectée (330) ;
- émission (220) d'une information (325) en fonction de l'étape de traitement actuelle (305) ;
- balayage (230) d'un paramètre d'un premier appareil de cuisine du parc d'appareils, dont la valeur commande l'atteinte de la condition de transition (330) ; et
- établissement automatique (240) d'une étape de traitement suivante (305) de la recette de cuisine (300) comme étape de traitement actuelle (305), au cas où la condition de transition (330) est remplie, dans lequel l'étape de traitement suivante concerne un deuxième appareil de cuisine du parc d'appareils, dans lequel le premier et le deuxième appareil de cuisine sont différents, **caractérisé en ce que**
- la condition de transition (330) comprend une modification de consistance d'un ingrédient dans un récipient (160) sous l'influence d'un traitement mécanique,
- le paramètre concerne les vibrations du récipient (160) et
- le fait de savoir si la condition de transition (330) est remplie est déterminé sur la base d'une diffusion de fréquences des vibrations (235).

2. Procédé (200) selon la revendication 1, dans lequel l'information (325) comprend une instruction de commande pour un appareil de cuisine commandable (150) et l'appareil de cuisine (150) est commandé en conséquence.

3. Procédé (200) selon l'une des revendications précédentes, dans lequel le paramètre concerne un état de fonctionnement de l'appareil de cuisine (150).

4. Procédé (200) selon l'une des revendications précédentes, dans lequel l'information (325) comprend des données destinées à un utilisateur, émises sous forme textuelle, figurative, sonore ou haptique (220).

5. Procédé (200) selon l'une des revendications précédentes, dans lequel le paramètre concerne l'écoulement d'une durée prédéterminée.

6. Procédé (200) selon l'une des revendications précédentes, dans lequel la condition de transmission (330) comprend l'ajout d'une quantité déterminée d'un ingrédient dans un récipient (160) et le balayage (230) du paramètre comprend une détermination du poids du récipient (160).

7. Procédé (200) selon l'une des revendications précédentes, dans lequel une saisie d'utilisateur (245) est balayée et une étape de traitement (305) de la recette de cuisine (300) est établie (250) comme étape de traitement actuelle (305) en fonction de la saisie d'utilisateur.

8. Procédé (200) selon la revendication 7, dans lequel le balayage (245) de la saisie d'utilisateur comprend le balayage d'un signal sonore.

9. Dispositif (105) pour le traitement d'une recette de cuisine (300) au moyen d'un parc d'appareils d'un utilisateur, qui comprend plusieurs appareils de cuisine, dans lequel la recette de cuisine (300) comprend une pluralité d'étapes de traitement (305) et des conditions de transition (330) affectées respectives, et dans lequel le dispositif (105) comprend les éléments suivants :
- un dispositif d'enregistrement (115) pour le stockage de la recette de cuisine (300) ;
- une interface (120) via laquelle au moins un premier et un deuxième appareil de cuisine du parc d'appareils sont commandables, le premier et le deuxième appareil de cuisine étant différents,
- un dispositif de traitement (110), aménagé afin de déterminer une étape de traitement actuelle (305) de la recette de cuisine (300) et une condition de transition affectée (330) ;
- et d'émettre une information (325) en fonction de l'étape de traitement actuelle (305) ; et
- un dispositif de balayage (125, 135, 140, 145) pour un paramètre du premier appareil de cuisine, dont la valeur commande l'atteinte de la condition de transition (330) ;
- dans lequel le dispositif de traitement (110) est en outre aménagé afin d'établir automatiquement une étape de traitement suivante (305) de la recette de cuisine (300) comme étape de traitement actuelle (305), au cas où la condition de transmission (330) est remplie, dans lequel l'étape de traitement suivante concerne le deuxième appareil de cuisine du parc d'appareils ;
**caractérisé en ce que**
- le dispositif de traitement (110) est aménagé afin de tenir compte d'une modification de consistance d'un ingrédient dans un récipient (160) sous l'influence d'un traitement mécanique comme condition de transition (330),
- le paramètre concerne les vibrations du récipient (160) et
- le dispositif de traitement (110) est aménagé afin de déterminer si la condition de transition (330) est remplie sur la base d'une diffusion de fréquences des vibrations (235).
